# EUROPÄISCHE PATENTSCHRIFT

(11) **EP 4 252 988 B1**
(45) Veröffentlichungstag und Bekanntmachung des Hinweises auf die Patenterteilung: **03.12.2025**
(21) Anmeldenummer: 23192416.8
(22) Anmeldetag: 30.07.2019
(51) Int. Cl.: B29C 49/06, B29C 45/00, B29B 11/14, B29C 49/10, B29B 11/08, B29L 31/00

(54) **PREFORM MIT STÜTZRING**
PREFORM HAVING A SUPPORT RING
PRÉFORME DOTÉE D'UNE BAGUE DE SUPPORT

(30) Priorität: 10.08.2018 CH 9772018; 14.05.2019 CH 6302019
(43) Veröffentlichungstag der Anmeldung: 04.10.2023
(62) Teilanmeldung aus: 19749295.2
(73) Patentinhaber: ALPLA Werke Alwin Lehner GmbH & Co. KG, 6971 Hard (AT)
(72) Erfinder: DEMIR, Adem, 6923 Lauterbach (AT)
(74) Vertreter: Swisspat Riederer Hasler Patentanwälte AG

(56) Entgegenhaltungen:
- EP-A1- 1 880 824
- EP-A2- 2 439 033
- WO-A2-00/12397
- DE-A1- 102009 007 906
- DE-A1- 102016 102 040
- GB-A- 2 068 886
- US-A- 4 715 504
- US-A1- 2004 146 673
- US-A1- 2006 073 288

## Beschreibung

### Gebiet der Erfindung

Die Erfindung betrifft einen Preform sowie einen Kunststoffbehälter.

### Stand der Technik

Zur Herstellung von Kunststoffflaschen ist das Streckblasverfahren bekannt. Bei diesem Verfahren wird ein sogenannter Preform mit einem länglichen Preformkörper zunächst spritzgegossen. Der Preform weist an einem ersten Längsende einen Boden auf und weist an seinem zweiten dem ersten Längsende gegenüberliegenden Längsende einen Halsabschnitt auf. An dem Halsabschnitt ist der Flaschenverschluss und zumeist ein Stützring ausgeformt, welcher zusammen mit dem Preform spritzgegossen wird. Der Preform wird in ein Formwerkzeug eingebracht und in dem Formwerkzeug zuerst durch einen Streckdorn in der Länge verstreckt und dann mit Druckluft aufgeblasen, wodurch er radial verstreckt wird. Dadurch nimmt der Preform die durch das Formwerkzeug vorgegebene Flaschenform an. Nach dem Reck-/ Blasvorgang wird die fertige Kunststoffflasche aus dem Formwerkzeug entformt.

Im sogenannten Einstufen-Streckblasverfahren wird der Preform ohne Abkühlung und Zwischenlagerung sofort nachdem er spritzgegossen wurde zu einer Kunststofflasche geformt.

Im Zweistufen-Streckblasverfahren wird in einem ersten Verfahrensschritt der Preform in der Regel spritzgegossen, abgekühlt und zwischengelagert. Alternativ können Preforms auch in Extrusionsblasverfahren oder als Kunststoffpressverfahren hergestellt werden. Auch hier werden die Preforms nach deren Herstellung abgekühlt und gelagert. Der Preform wird in einem zweiten späteren Verfahrensschritt wieder erwärmt und in einem Formwerkzeug wie oben beschrieben streckgeblasen. Beispielsweise werden mit Infrarotstrahlung Bereiche des Preforms mehr oder weniger erwärmt, um ein Temperaturprofil in den Preform einzubringen, welches für das Streckblasen des Preforms erforderlich ist.

Um den Preform zwischen den einzelnen Fertigungsstationen transportieren zu können, ist unterhalb des Flaschenverschlusses der Stützring an dem Preform ausgebildet, welcher sich in Umfangsrichtung erstreckt. Der Stützring wirkt als Haltelement, an welchem Transportvorrichtungen und Haltevorrichtungen der Fertigungslinie angreifen können. Damit die Transport- bzw. die Haltevorrichtungen an dem Stützring angreifen können, ist der Querschnittsdurchmesser des Preforms in radialer Richtung grundsätzlich kleiner ausgeführt als der Durchmesser des Stützrings.

Dadurch ist der Querschnittsdurchmesser des Preforms limitiert und den Dimensionen und den damit verbundenen Ausgestaltungsmöglichkeiten des Preforms und der daraus hergestellten Flasche sind Grenzen gesetzt. Beispielsweise lässt sich eine für die zu erzeugende Kunststoffflasche benötigte Materialmenge dadurch in den Preform einbringen, dass seine Länge vergrössert wird.

Der Stützring, welcher an der hergestellten Kunststoffflasche in der Regel keine Funktion mehr erfüllt, bedeutet einen erhöhten Materialeinsatz, denn der Stützring macht zumeist 20% des Gewichtes des Preformhalses aus. Das Gewicht des Preformhalses umfasst seinerseits 10% des für die Herstellung einer Kunststofflasche benötigten Materials. Bei der Herstellung von Massenartikeln, beispielsweise Kunststofflaschen aus Polyethylenterephtalat (PET), stellt der Materialeinsatz einen wesentlichen Faktor für ökologische und die ökonomische Wettbewerbsfähigkeit dar. Durch die sehr hohen Stückzahlen von produzierten Kunststoffflaschen haben selbst geringe Reduktionen des Materialgewichts pro Flasche das Potential zu Materialeinsparungen im Tonnenbereich zu führen.

In den Publikationen GB 2068886 A, US 2006/73288 A1, DE 10 2009 007 906 A1, US 4,715,504, WO 00/12397, und US 2004/0146673 A1 sind Preforms offenbart, welche einen abnehmbaren Stützring aufweisen. In der EP 1 880 824 A1 ist ein Preform beschrieben, welcher aus einem Halsteil, einer Seitenwand und einem Boden zusammengeschweisst ist. Der Aussendurchmesser der Seitenwand kann grösser oder kleiner als der Aussendurchmesser des Halsteiles sein. Die Wandstärke der Seitenwand ist dünner als die Wandstärke des Bodens.

### Aufgabe der Erfindung

Aus den Nachteilen des Stands der Technik ergibt sich daher die Aufgabe der vorliegenden Erfindung einen Preform vorzuschlagen, welcher verbesserte Ausgestaltungsmöglichkeiten der herzustellenden Flasche erlaubt.

### Beschreibung

Ein Preform zur Herstellung von Kunststoffbehältern, insbesondere Kunststoffflaschen, umfasst üblicherweise einen länglichen Körper, einen Boden, welcher an einem ersten Längsende des Körpers ausgebildet ist, einen Halsabschnitt, welcher an einem zweiten Längsende des Körpers ausgebildet ist und dem ersten Längsende gegenüber liegt, eine Ausgiessöffnung, welche an dem Halsabschnitt vorgesehen ist und einen Stützring, welcher radial von dem Körper abragt und den Halsabschnitt von dem Körper trennt.

Der Stützring ist ein separates Stützelement ist, welches formschlüssig an dem Preform festlegbar ist.

Die Erfindung zeichnet sich dadurch aus, dass der Körper einen Aussendurchmesser besitzt, welcher den Aussendurchmesser des Halsabschnittes um mehr als 5 mm, bevorzugt um mehr als 10 mm und besonders bevorzugt um mehr 15 mm überragt. Dadurch, dass gemäss der Erfindung der Aussendurchmesser des Stützrings nicht mehr die limitierende Grösse für den Aussendurchmesser des Körpers darstellt, lässt sich dieser vergrössern. Dadurch ergeben sich hohe radiale Streckraten, da ausreichend Material vorhanden ist, welche dazu führen, dass bei dem hergestellten Kunststoffbehälter ein sehr grosser Aussendurchmesser relativ zum Aussendurchmesser des Halsabschnitts möglich ist. Solche Aussendurchmesser sind beim Stand der Technik unmöglich zu realisieren, da der Aussendurchmesser des Preformkörpers bei diesen Preforms durch den Aussendurchmesser des zusammen mit dem Preform gespritzten Stützrings limitiert ist.

Denkbar wäre es auch, dass die Wandstärke des Preformkörpers zunimmt, indem der Innendurchmesser des Körpers verkleinert wird. D.h., dass der Aussendurchmesser des Körpers klein bleibt und der Innendurchmesser des Körpers verkleinert wird. Dies ist jedoch nicht bevorzugt, da dies zum einen zu erhöhten radialen Streckraten führt und andererseits der Innendurchmesser des Körpers durch den Aussendurchmesser des Streckdorns limitiert ist.

Dadurch, dass der Stützring ein separates Stützelement ist, ist der Aussendurchmesser des Körpers nicht mehr durch den Aussendurchmesser des Stützrings limitiert. Der Aussendurchmesser des Stützrings muss zwar grösser sein als der Aussendurchmesser des Körpers, um den Preform zwischen den Produktionsschritten transportieren zu können. Die Grösse des Aussendurchmessers des Stützrings kann jedoch beliebig gross gewählt werden, da er von dem Preform bzw. dem produzierten Kunststoffbehälter abnehmbar ist. Dadurch ergeben sich ungeahnte Möglichkeiten des Designs von Kunststoffbehältern, welche im Zweistufen-Streckblasverfahren produziert werden. Insbesondere ist es durch die Erfindung ermöglicht, Kunststoffbehälter mit viel grösseren Aussendurchmessern zu produzieren.Die Erfindung zeichnet sich bevorzugt dadurch aus, dass der Stützring von dem Preform abnehmbar ist. Dadurch stört ein grosser Aussendurchmesser des Stützrings das Design und die Funktion des produzierten Kunststoffbehälters nicht, denn er lässt sich von dem Kunststoffbehälter bzw. dem Preform abnehmen. Der abnehmbare Stützring ist wieder verwendbar und lässt sich auf einer Vielzahl von Preforms befestigen und von diesen wieder abnehmen. Dadurch lässt sich auch eine signifikante Menge an Material einsparen, da der Stützring nicht zusammen mit dem Preform spritzgegossen wird und nicht für jeden Preform ein einzelner Stützring benötigt wird.

Bei einer bevorzugten Ausführungsform der Erfindung weist der Stützring einen Datenträger auf, welcher wenigstens Träger einer Identifikationsnummer ist. Dadurch, dass der Stützring von dem Preform abnehmbar ist, lässt sich Material zur Preformherstellung einsparen und die Identifikationsnummer lässt sich bei einem weiteren Preform wieder verwenden oder es wird eine neue Identifikationsnummer auf dem Datenträger gespeichert. Die Identifikationsnummer ermöglicht es, dass weitere Daten den Preform betreffend nicht auf dem Datenträger gespeichert sein müssen, sondern in einer externen Datenbank gespeichert sind. Durch die Identifikationsnummer können dem Preform bzw. dem daraus hergestellten Behälter eindeutig alle externen Daten zugewiesen werden. Da der Datenträger lediglich die Identifikationsnummer aufweist, kann dieser sehr einfach ausgestaltet sein. Denkbar ist es, dass die Oberfläche des Preforms oder des aus dem Preform hergestellten Kunststoffbehälters der Datenträger aufweist.

Bevorzugt ist es, wenn der Datenträger Informationen wie Produktionszeitpunkt und - ort, Preformmaterial und Informationen zur Wiederverwendbarkeit, Informationen zum Füllgutinhalt oder Informationen bezüglich eines Pfandsystems den Kunststoffbehälter betreffend trägt. Der Datenträger kann daher eine vollständige Beschreibung des Behälters und dessen Inhalt bereitstellen und es können auf dem Datenträger in flexibler Weise genau die Informationen gespeichert werden, welche vom Produzenten, dem Kunden und dem Wiederverwerter benötigt werden.

In einer bevorzugten Ausführungsform der Erfindung ist der Datenträger in Gestalt einer elektronischen Schaltung realisiert. Der abnehmbare Stützring, welcher die elektronische Schaltung aufweist, ermöglicht es, dass der Behälter bei seiner Entsorgung nicht als Elektronikschrott erachtet werden muss, sondern in üblicher Weise entsorgt oder wiederverwertet werden kann. Der Datenträger kann wiederbespielt werden und auf einem weiteren Preform wieder verwendet werden oder separat entsorgt werden.

Dadurch dass die elektronische Schaltung innerhalb oder auf dem Stützring positioniert ist, kann diese besonders gut geschützt bzw. befestigt sein, oder kann in einfacher Weise auf dem Stützring aufgebracht werden.

In einer besonders bevorzugten Ausführungsform der Erfindung ist die elektronische Schaltung ein RFID-Transponder. Unter einem RFID-Transponder (radio-frequency identification transponder) soll im Rahmen dieser Anmeldung eine elektronische Schaltung verstanden werden, aus welcher berührungslos Daten mit Hilfe elektromagnetischer Wellen aus dem Transponder wenigstens ausgelesen werden können. Zum Auslesen wird ein Lesegerät benötigt. Bei einem passiven RFID-Transponder wird dessen Energieversorgung aus den Funksignalen des Lesegerätes bereitgestellt. Der Aufbau eines RFID-Transponders sieht prinzipiell eine Antenne, einen analogen Schaltkreis zum Empfangen und Senden (Transceiver) sowie einen digitalen Schaltkreis und einen permanenten Speicher vor. Der digitale Schaltkreis ist bei komplexeren Modellen ein kleiner Mikrocontroller. RFID-Transponder verfügen über einen mindestens einmal beschreibbaren Speicher, der ihre unveränderliche Identität enthält. Werden mehrfach beschreibbare Speicher eingesetzt, können während der Lebensdauer weitere Informationen abgelegt werden. Ein RFID-Transponder kann sehr kleinbauend ausgeführt werden und daher leicht in dem Stützring untergebracht werden. Bevorzugt ist der RFID-Transponder ein passiver RFID-Transponder, wenngleich auch ein aktiver RFID-Transponder mit einer eigenen Stromversorgung denkbar ist. Da die Daten über den Sender in den RFID-Transponder ein-und ausgelesen werden, muss der Datenträger nicht sichtbar sein und kann in dem Stützring eingegossen sein. Dadurch ist dieser besonders gut vor mechanischen Belastungen und Verschmutzungen geschützt. Durch Abnahme des Stützringes von dem Preform oder dem Kunststoffbehälter kann der RFID-Transponder auf einem weiteren Preform wiederverwendet werden oder separat entsorgt werden.

In einer weiteren bevorzugten Ausführungsform der Erfindung ist der Datenträger in lesbarer Form für ein Datenerfassungsgerät, beispielsweise als Strichcode oder QR-Code, an der Oberfläche des Stützringes angebracht. Diese Form des Datenträgers ist kostengünstig in der Herstellung, allerdings muss der Datenträger an der Oberfläche des Supportringes liegen, um sichtbar und damit lesbar zu sein. Auch andere Datenträger in lesbarer Form, beispielsweise ein dreidimensionales Wasserzeichen sind möglich.

Der erfindungsgemässe Preform wird vor allem zur Herstellung von Kunststoffbehältern in einem Zweistufen-Streckblasverfahren verwendet, weil der Stützring bei der Weiterverarbeitung des Preforms - wie zuvor erläutert - benötigt wird, damit Transportvorrichtungen und Haltevorrichtungen der Fertigungslinien angreifen können. Es sind jedoch auch Anwendungsfälle denkbar, bei dem ein Stützring in anderer Form beispielsweise in der Anlage zur Befüllung des fertigen Kunststoffbehälters als Transportvorrichtungen und Haltevorrichtungen genutzt wird.

In einer besonders bevorzugten Ausführungsform der Erfindung ist an dem Preform am Übergang von dem Halsabschnitt zu dem Körper eine sich in Umfangsrichtung des Preforms erstreckende Nut bevorzugt eine Ringnut vorgesehen, in welche der Stützring eingreifen kann. Der Stützring ist durch diese Ausgestaltungsform zuverlässig an dem Preform gehalten und kann trotzdem von diesem ohne Aufwand abgenommen bzw. abgezogen werden. Andere denkbare Ausgestaltungsformen der formschlüssigen Verbindung können Vorsprünge an dem Preform sein, in welche der Stützring greift oder dass der Stützring auf den Halsabschnitt aufschraubbar ist.

Als zweckdienlich hat es sich erwiesen, wenn die Nut einen Grund und eine erste und zweite an den Grund anschliessende Flanke umfasst. Die Nut ist im Querschnitt bevorzugt U-förmig, wodurch der Stützring weder nach oben oder unten an dem Preform abrutschen kann und auch bei mechanischen Belastungen während der Produktionsschritte zuverlässig an dem Preform gehalten ist.

In einer weiteren Ausgestaltungsform der Erfindung entspricht der Innendurchmesser des Stützrings im Wesentlichen dem Durchmesser des Grunds. Der Stützring ist daher spielfrei an dem Preform gehalten, wodurch auch mechanische Belastungen, welche während der Produktion auftreten, es nicht vermögen den Stützring von dem Preform zu trennen.

In einer weiteren Ausführungsform der Erfindung ist der Stützring offen und lässt sich derart aufweiten, dass er auf den Preform aufsteckbar ist, indem er in der Nut aufnehmbar ist. Der Stützring ist demnach einfach gestaltet und lässt sich maschinell auf den Preform aufstecken und von diesem abnehmen.

Zweckmässigerweise besitzt der Stützring einen Öffnungswinkel von kleiner als 180 Grad und grösser als 0 Grad, bevorzugt von kleiner als 160 Grad und grösser als 30 Grad und besonders bevorzugt von kleiner als 120 Grad und grösser als 70 Grad besitzt. Diese Bemassung ermöglicht es, dass der Stützring durch einfaches Verbiegen seiner Enden aufweitbar ist und auf den Preform aufsteckbar ist und von diesem abnehmbar ist.

In einer weiteren Ausführungsform der Erfindung besitzt der Stützring wenigstens ein Gelenk, um welches er aufklappbar und schliessbar ist. Bei dieser Ausführungsform kann der Stützring aus einem stabilen unelastischen Material hergestellt sein, da es keiner elastischen Materialverformung bedarf, um den Stützring auf dem Preform zu befestigen und von diesem abzunehmen. Denkbar ist es auch, dass der Stützring zwei Gelenke entlang seines Umfangs umfasst, wobei eines der Gelenke lösbar ist und sich der Stützring um das andere Gelenk aufklappen lässt. Diese Art der Befestigung ist besonders stabil.

In einer weiteren Ausführungsform der Erfindung, welche ebenfalls zu einer sehr stabilen Halterung führt, umfasst der Stützring zwei Halbkreissegmenten, welche aneinander befestigbar sind.

In einer weiteren Ausführungsform der Erfindung besteht der Stützring aus einem kunststoffummantelten Federstahl, aus Metall oder Kunststoff. Der Kunststoffmantel verhindert, dass der Preform beim Befestigen bzw. Abnehmen des Stützrings zerkratzt wird. Das Material des Stützrings ist abhängig davon zu wählen, wie weit der Stützring aufbiegbar sein muss, ohne dass das Material beschädigt wird.

In einer weiteren Ausführungsform der Erfindung besteht der Stützring aus einem elastischen Material und hat eine Mehrzahl von sich in radialer Richtung erstreckender und in axialer Richtung des Preforms aufbiegbarer Lamellen ausgebildet. Der Stützring lässt sich in axialer Richtung auf den Preform aufschieben, bis er in der Nut verrastet und lässt sich auch in axialer Richtung von dem Preform bzw. dem Kunststoffbehälter abziehen. In dieser Ausführungsform ist der Stützring in der Art des Maschinenelements eines Lamellenrings ausgeführt.

Zweckmässigerweise sind an dem Halsabschnitt Befestigungsmittel zur formschlüssigen Festlegung eines mit korrespondierenden Eingriffsmitteln ausgestatteten Verschlussteils ausgebildet. Dadurch lässt sich die Ausgiessöffnung des Kunststoffbehälters zu dem der Preform streckgeblasen wird mit dem Verschlussteil verschliessen.

Die Erfindung zeichnet sich auch bevorzugt dadurch aus, dass das Verhältnis des Aussendurchmessers des Körpers zu dem Aussendurchmesser des Halsabschnittes zwischen 1,05 und 0,7 beträgt. Ein derart kleines Verhältnis von 0,7 ist deshalb möglich, da der Stützring, dessen Aussendurchmesser grösser als der Aussendurchmesser des Körpers sein muss, abnehmbar ist und auf dem Kunststoffbehälter nach dessen Produktion nicht mehr vorhanden ist. Wie bereits mehrfach beschrieben, ermöglicht es die Erfindung, dass der Kunststoffbehälter bei einem vorgegebenen standardmässigen Aussendurchmesser des Halsabschnittes einen sehr grossen Körperaussendurchmesser haben kann.

In einer weiteren bevorzugten Ausführungsform der Erfindung besitzt der Körper eine Wandstärke von 3 mm, bevorzugt von 5 mm und besonders bevorzugt von 7 mm, wobei der Innendurchmesser des Halsabschnitts und des Körpers im Wesentlichen gleich gross sind. Die nach aussen hin zunehmenden Wandstärken erlauben es Kunststoffbehälter mit grossen Aussendurchmessern zu erzeugen, ohne dass an dem Kunststoffbehälter ein Stützring mit einem nicht akzeptierbar grossen Aussendurchmesser vorhanden wäre.

Zweckmässigerweise besteht der Preform aus Polyethylenterephtalat oder Polypropylen. Diese Materialien sind dafür bekannt sich im Zweistufen-Streckblasprozess besonders gut verarbeiten zu lassen. Es können aber auch andere Materialen, wie beispielsweise Polyethylenfuranoat zur Herstellung von Preforms genutzt werden.

Ein weiterer Aspekt der Erfindung betrifft einen Preform, welcher Preform frei von einem Stützring ist und welcher Preform zwischen dem Körper und dem Halsabschnitt ein Befestigungsmittel zur formschlüssigen Festlegung eines mit einem korrespondierenden Eingriffsmittel ausgestatteten Stützrings ausgebildet hat. Da der Preform und der Stützring zwei separate Teile sind, müssen diese nicht zwangsläufig zusammen ausgeliefert werden. Aus ökonomischen Gründen ist es angestrebt, dass bereits zur Herstellung von Kunststoffbehältern verwendete Stützringe wiederverwendet werden und mit neuen spritzgegossenen Preforms verbunden werden. Dadurch lässt sich eine signifikante Menge an Produktionsmaterial einsparen. Der Materialeinsatz für den Preform ist daher reduziert, da er keinen Supportring aufweist. Das Materialvolumen des Preforms ist um das Volumen des Supportringes reduziert.

In einer weiteren bevorzugten Ausführungsform der Erfindung ist das Befestigungsmittel eine sich in Umfangsrichtung des Preforms erstreckende Nut ist. Die Nut ermöglicht eine besonders zuverlässige Halterung des Stützrings an dem Preform. Denkbar wären jedoch auch andere Befestigungsmittel, wie ein Aussengewinde auf welches der Stützring aufgeschraubt wird oder Vorsprünge, auf welche der Stützring aufgesteckt wird.

Noch ein Aspekt der Erfindung betrifft einen Stützring zur Befestigung an einem Preform. In vorteilhafter Weise weist der Stützring einen Datenträger auf, welcher wenigstens Träger einer Identifikationsnummer ist. Die Vorteile des Datenträgers wurden weiter oben bereits beschrieben.

In einer besonders bevorzugten Ausführungsform ist der Datenträger eine elektronische Schaltung, welche innerhalb oder auf dem Stützring positioniert ist oder der Datenträger ist in lesbarer Form für ein Datenerfassungsgerät, beispielsweise als Strichcode oder QR-Code, an der Oberfläche des Stützringes angebracht.

Noch ein Aspekt der Erfindung betrifft einen Kunststoffbehälter hergestellt in einem Zweistufen-Streckblasverfahren aus einem oben beschriebenen vorzugsweise spritzgegossenen Preform, wobei zwischen dem Körperabschnitt und dem Behälterhals ein Befestigungsmittel zur formschlüssigen Festlegung eines mit einem korrespondierenden Eingriffsmittel ausgestatteten Stützrings ausgebildet ist. Wie bereits ausführlich beschrieben, ist es Wesen der Erfindung, dass der Stützring von dem Preform bzw. von dem Kunststoffbehälter abnehmbar ist. Dadurch wirken sich der Aussendurchmesser des Stützringes und auch die Gestalt des Stützrings nicht auf das Design des Kunststoffbehälters aus, da der Stützring an dem fertig produzierten Kunststoffbehälter nicht mehr vorhanden ist. Der Aussendurchmesser des Stützrings kann daher beliebige Grössen besitzen, solange die Produktionsabläufe dadurch nicht behindert werden.

In einer weiteren besonders bevorzugten Ausführungsform der Erfindung beträgt, das Verhältnis des Behälterhalsdurchmessers zum Aussendurchmesser des Körperabschnitts 3 bis 6, insbesondere 3,8 bis 5,5. Bei einem standardmässigen Behälterhalsdurchmesser von < 25 mm, wie er bei PET-Flaschen üblich ist, lassen sich somit Aussendurchmesser von etwa 150 mm realisieren. Dies gilt insbesondere auch für im Querschnitt ovale PET-Flaschen. Mit spritzgegossenen Preforms gemäss dem Stand der Technik ist es nicht möglich Kunststoffbehälter mit solchen Abmessungen zu produzieren.

Ein weiterer Aspekt der Erfindung Betrifft ein Verfahren zur Herstellung von Kunststoffbehältern, insbesondere Kunststoffflaschen, in einem Zweistufen-Streckblasverfahren und ein Verfahren zur Bereitstellung von Daten die hergestellten Kunststoffbehälter betreffend. Gemäss der vorliegenden Erfindung wird auf den Preform nach dem Spritzgiessen ein Stützring formschlüssig zwischen dem Körper und dem Halsabschnitt befestigt. Der Stützring wird daher nicht zusammen mit dem Preform einstückig spritzgegossen, sondern wird als separates Stützelement nach Herstellung des Preforms auf diesem festgelegt. Der Stützring kann gemäss der vorliegenden Erfindung auch zusammen mit dem Preform in einer gemeinsamen Spritzgussform nach einem 2-Komponenten-Spritzgiessverfahren hergestellt werden. Der Stützring kann aus einem anderen Material gefertigt sein als der Preform, damit sich dieser von dem Preform abnehmen lässt. Sofern die verwendeten Kunststoffe keine Bindung miteinander eingehen, ist auf diese Weise eine einfache Bestückung des Preforms mit einem abnehmbaren Stützring in einem einzigen Produktionschritt möglich.

In einer weiteren besonders bevorzugten Ausführungsform der Erfindung wird während der Herstellung des Stützringes ein Datenträger in Gestalt einer elektronischen Schaltung in die Spritzgussform eingelegt und wird von dem Stützring umspritzt. Die elektronische Schaltung ist dadurch besonders gut geschützt und gehalten. Vorrausetzung dafür ist, dass die Daten ohne ein optisches Verfahren aus dem Datenträger auslesbar sind, da der Datenträger nicht sichtbar ist.

In einer weiteren Ausführungsform der Erfindung wird der Stützring in der Spritzgussmaschine, bevorzugt während des Abkühlprozesses, oder nach Entfernen des Preforms aus der Spritzgussmaschine an dem Preform befestigt, falls der Stützring getrennt von dem Preform hergestellt wird. Ziel ist es, das Verfahren durch den zusätzlichen Befestigungsschritt des Stützrings nicht zu verlängern. Deshalb wird der Stützring synchron zu einem bestehenden Verfahrensschritt an dem Preform befestigt.

In einer weiteren Ausführungsform der Erfindung wird der Stützring bei geschlossenem Formwerkzeug oder nach dem Entformen des Kunststoffbehälters von der Kunststoffbehälter abgenommen. Auch bei der Abnahme des Stützringes ist es Ziel durch diesen zusätzlichen Verfahrensschritt keine zusätzliche Zeit während der Produktion des Kunststoffbehälters zu verlieren. Da die Stückzahlen und die Taktzahlen bei dem Herstellverfahren sehr hoch sind, kann schon ein geringer zusätzlicher Zeitaufwand zu einer signifikanten Verschlechterung der Produktivität führen. Daher wird der Stützring bevorzugt während des Streckblasens oder dem Transportschritt des Kunststoffbehälters von dem Formwerkzeug auf einem Transportband oder während des Verpackungsschrittes des Kunststoffbehälters von dem Kunststoffbehälter abgenommen.

Zweckmässigerweise werden auf den Datenspeicher während des Produktionsprozesses des Kunststoffbehälters und/oder während des Befüllungsprozesses des Kunststoffbehälters Daten eingelesen. Dadurch sind auf dem Datenspeicher Daten vorhanden, welche relevant für den Produktionsprozess sind. Die Rückverfolgbarkeit des Produktionsprozesses ist daher lückenlos auf dem Datenspeicher dokumentierbar.

Zweckmässigerweise werden von dem Datenspeicher während des Produktionsprozesses des Kunststoffbehälters und/oder während des Befüllungsprozess des Kunststoffbehälters Daten ausgelesen werden. Dadurch ist es denkbar, dass durch die ausgelesenen Daten der Produktionsprozess und/oder der Befüllungsprozess teilweise oder vollständig gesteuert werden kann.

In einer weiteren bevorzugten Ausführungsform der Erfindung werden von dem Datenspeicher während der Benutzung des Kunststoffbehälters und/oder während der Wiederverwertung des Kunststoffbehälters Daten ausgelesen. Dadurch kann der Konsument mit Daten informiert werden, welche beispielsweise auf einem Smartphone angezeigt werden können. Genauso können für die Wiederverwertung des Behälters relevante Daten aus dem Datenspeicher ausgelesen werden. Dadurch werden falsche Klassifizierungen oder Zuordnungen des Behälters bei der Wiederverwertung zuverlässig verhindert.

Als vorteilhaft erweist es sich, wenn der Stützring nach der Herstellung des Kunststoffbehälters oder nach der Befüllung des Kunststoffbehälters von dem Kunststoffbehälter entfernt wird. Insbesondere, wenn die auf dem Datenspeicher vorhandenen Daten nach der Produktion oder nach der Befüllung des Behälters nicht mehr benötigt werden und der Supportring auch keine Haltefunktion zu erfüllen hat, kann der Supportring abgenommen werden und wieder verwendet werden. Dadurch verbleibt ein sortenreiner Kunststoffbehälter, welcher problemlos entsorgt oder wiederverwertet werden kann. Der Supportring kann oftmals auf weitere Preforms aufgesteckt werden und erfüllt wieder die Haltefunktion und es können neue Daten eingelesen und ausgelesen werden oder die bestehenden Daten weiter verwendet werden. Das für den Supportring benötigte Material kann bei jedem Behälter, von dem der Supportring abgenommen wird, eingespart werden.

Als zweckmässig hat es sich erwiesen, wenn der Stützring vor der Entsorgung oder während der Wiederverwertung des Kunststoffbehälters von dem Kunststoffbehälter entfernt wird. Dadurch können auch dem Benutzer und dem Wiederverwerter des Behälters relevante Daten zur Verfügung gestellt werden. Der abgenommen Supportring kann einem Sammelsystem zugeführt werden. Dadurch kann der Supportring auf einen weiteren Preform aufgesteckt werden und der von dem Supportring getrennte Behälter kann sortenrein entsorgt bzw. wiederverwertet werden.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine erste Ausführungsform eines Preforms und eines Stützrings in axonometrischer Ansicht;
- Figur 2:: eine Frontansicht des Preforms aus Figur 1;
- Figur 3:: eine Schnittdarstellung des Preforms aus Figur 2 entlang der Schnittlinie III-III;
- Figur4:: eine zweite Ausführungsform des Preforms in einer Frontansicht;
- Figur 5:: eine Schnittdarstellung des Preforms aus Figur 3 entlang der Schnittlinie V-V;
- Figur 6:: eine dritte Ausführungsform des Preforms in einer Frontansicht;
- Figur 7:: eine Schnittdarstellung des Preforms aus Figur 6 entlang der Schnittlinie VII-VII;
- Figur 8:: eine zweite Ausführungsform des Stützrings;
- Figur 9:: eine dritte Ausführungsform des Stützrings;
- Figur 10:: eine vierte Ausführungsform des Stützrings
- Figur 11:: eine fünfte Ausführungsform des Stützrings mit einer ersten Ausführungsform eines Datenträgers und
- Figur 12:: die fünfte Ausführungsform des Stützrings mit einer zweiten Ausführungsform eines Datenträgers.

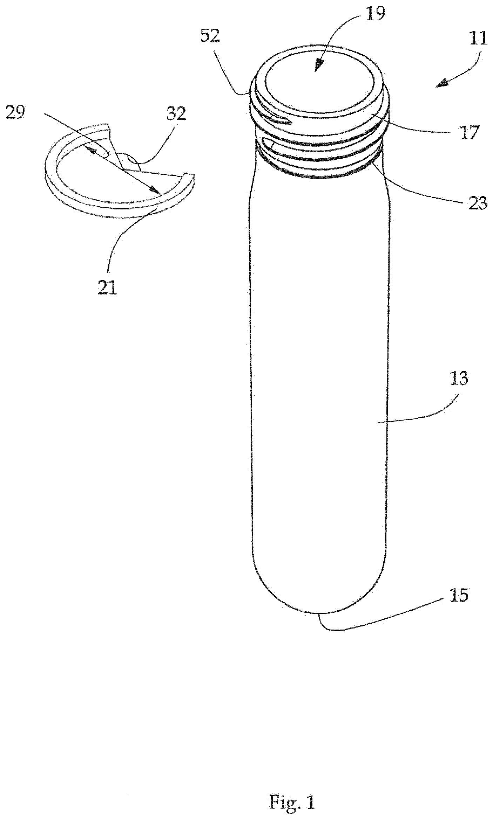

In den Figuren 1 bis 7 ist ein Preform gezeigt, welcher gesamthaft mit dem Bezugszeichen 11 bezeichnet ist. Der Preform 11 dient der Herstellung von Kunststoffbehältern und insbesondere der Herstellung von Kunststoffflaschen in einem Zweistufen-Streckblasverfahren. In der ersten Stufe wird der Preform spritzgegossen und im Anschluss daran abgekühlt. In der zweiten Stufe wird der Preform gemäss einem vorgegebenen Temperaturprofil erwärmt und in einem Formwerkzeug biaxial vertreckt. Entlang der Längsachse wird der Preform mit einem Reckdorn verstreckt und in radialer Richtung wird er durch Aufblasen verstreckt.

Der Preform 11 umfasst einen länglichen Körper 13 mit einem ersten und zweiten Längsende. Am ersten Längsende ist ein Boden 15 ausgebildet, welcher auch den Boden des aus dem Preform 11 hergestellten Kunststoffbehälters bildet. Am zweiten Längsende ist ein Halsabschnitt 17 ausgebildet. An dem Halsabschnitt 17 ist eine Ausgiessöffnung 19 vorgesehen, durch welche der streckgeblasene Kunststoffbehälter befüllbar und entleerbar ist.

Im Gegensatz zum Stand der Technik wird ein Stützring 21 nicht zusammen mit dem Preform 11 spritzgegossen, sodass der Preform 11 und der Stützring einstückig sind. Vielmehr ist der Stützring 21 ein separates Stützelement, welches getrennt von dem Preform 11 hergestellt wird. Das Vorhandensein des Stützringes 21 ist im zweistufen-Streckblasen unumgänglich, da der Preform 11 bzw. der daraus hergestellte Kunststoffbehälter an dem Stützring 21 in dem Formwerkzeug gehalten wird und auch Transportmittel an dem Stützring 21 angreifen, um den Preform bzw. den Kunststoffbehälter zwischen den einzelnen Herstellungsstationen transportieren zu können bzw. den Herstellungsstationen zuführen zu können.

Der Stützring 21 ist formschlüssig an dem Preform 11 gehalten und lässt sich auf den Preform 11 aufstecken und von diesem abnehmen. Der Aussendurchmesser des Stützrings 21 ist der limitierende Faktor für den Aussendurchmesser des Preformkörpers 13. Um den Preform transportieren zu können, muss der Stützring gegenüber dem Preformkörper einen Überstand bilden. Deshalb muss der Aussendurchmesser des Preformkörpers grundsätzlich kleiner sein als der Aussendurchmesser des Stützringes. Da gemäss dem Stand der Technik der Stützring von dem Preform nicht abnehmbar ist, verbleibt er auch auf dem hergestellten Kunststoffbehälter. Auf diesem darf der Stützring jedoch einen bestimmten Aussendurchmesser nicht übersteigen, da dies für den Konsumenten nicht akzeptabel ist. Zusätzlich sind die mit einem vergrösserten Stützring einhergehenden Materialkosten und Gewichtszunahme nicht akzeptabel.

In überraschender Weise führt ein abnehmbarer Stützring 21 zu ungeahnten verbesserten Ausgestaltungsmöglichkeiten des herzustellenden Kunststoffbehälters. Nachdem der Stützring 21 von dem Preform 11 abnehmbar ist, kann er einen viel grösseren Aussendurchmesser besitzen, als wenn der Preform und der Stützring einstückig sind. Demzufolge kann auch der Preformkörper 13 einen grösseren Aussendurchmesser als Preformkörper des Stands der Technik besitzen. Dies führt dazu, dass der Preformkörper 13 mit einer nach aussen hin erhöhten Wandstärke spritzgegossen werden kann. Dadurch lassen sich Kunststoffbehälter mit einem signifikant grösseren Aussendurchmesser streckblasen. Der Durchmesser des Halsabschnittes 17 ist unabhängig von dem Aussendurchmesser des Kunststoffbehälters und kann demzufolge beliebig klein gewählt werden, so wie es die Vorgaben an das Endprodukt fordern.

Das Festlegen und Abnehmen des Stützrings 21 von dem Preform 11 lässt sich dadurch realisieren, dass der Stützring 21 formschlüssig an dem Preform 11 gehalten ist. Der Formschluss kann beispielsweise dadurch erfolgen, dass der Stützring 21 in eine an dem Preform 11 vorgesehene Nut 23 eingreift. Die Nut 23 ist bevorzugt zwischen dem Halsabschnitt 17 und dem Körper 13 ausgebildet und erstreckt sich in Umfangsrichtung des Preforms 11. Bevorzugt handelt es sich um eine Ringnut, es kann aber auch eine Nut ausgebildet sein, welche den Umfang des Preforms 11 nicht vollständig, also nur teilweise, umschliesst.

Die Nut umfasst definitionsgemäss einen Grund 25 und eine erste und zweite Seitenflanke 27a,27b, welche an dem Grund 25 anschliessen. Um einen sicheren und wackelfreien Formschluss zwischen der Nut 23 und dem Stützring 21 zu realisieren, ist der Innendurchmesser 29 des Stützrings 21 derart bemasst, dass er im Wesentlichen dem Durchmesser 31 des Grunds 25 entspricht.

Der Stützring kann unterschiedliche Ausgestaltungsformen gemäss der Figuren 1 und 8 bis 11 besitzen, damit er an dem Preform 11 festlegbar ist und von diesem wieder abnehmbar ist. In der Figur 1 ist ein offener Stützring 21 gezeigt, dessen Öffnungswinkel 32 ca. 100 Grad beträgt. Je nachdem wie elastisch das Material ist, aus dem der Stützring 21 gefertigt ist, kann der Öffnungswinkel auch gegen 0 streben. Dann muss der Stützring 21 jedoch stark aus seiner Erstreckungsebene heraus verbogen werden, um auf den Preform aufgesteckt werden zu können. Der Öffnungswinkel muss jedoch kleiner als 180 Grad sein, damit er nicht von dem Preform 11 rutscht. Bevorzugt ist der Stützring 21 aus einem Kunststoff oder einem Metall. Die Materialwahl wird auch dadurch beeinflusst, ob der Stützring 21 mehrfach verwendet wird oder nach einmaligem Aufstecken und Abnehmen auf bzw. von dem Preform 11 verworfen wird.

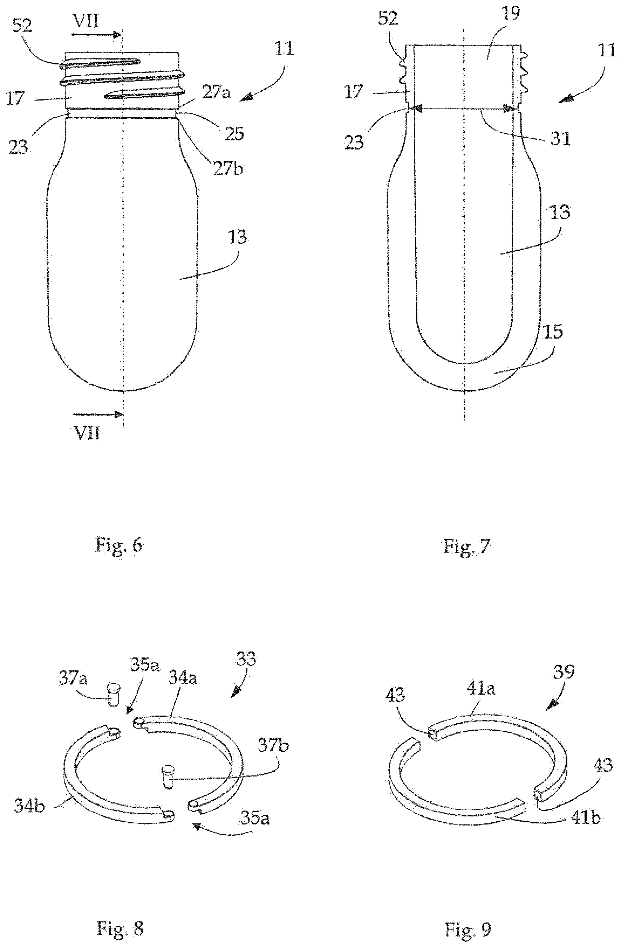

In der Figur 8 ist eine weitere Ausführungsform des Stützrings gezeigt, welche mit dem Bezugszeichen 33 beziffert ist. Der Stützring 33 ist zweiteilig ausgeführt. Die beiden offenen und bevorzugt halbkreisförmigen Teile 34a,34b des Stützrings sind mit einem ersten und zweiten Gelenk 35a,35b versehen. Die Gelenke 35a,35b weisen Bolzen 37a,37b auf. Die Bolzen 37a,37b halten die Teile des Stützrings 37 aneinander und die Teile können auch um einen der Bolzen 37a,37b verschwenkt werden, wenn der andere Bolzen aus seiner Halterung entfernt ist. Dadurch, dass die zwei Teile des Stützrings bevorzugt die Gestalt von Halbkreissegmenten aufweisen, welche mit den abnehmbaren Bolzen 37a,37b verdrehbar aneinander gehalten sind, lässt sich der Stützring rasch und werkzeuglos auf dem Preform 11 befestigen und auch wieder abnehmen.

In Figur 9 ist eine weitere Ausführungsform des Stützrings gezeigt, welche mit dem Bezugszeichen 39 bezeichnet ist. Auch dieser Stützring 39 umfasst zwei bevorzugt halbkreisförmige Teile 41a,41b. In dieser Ausführungsform sind die beiden Teile 41a,41b durch Magnete 43 aneinander gehalten. Die Magnetkraft ist derart bemasst, dass die Stützringteile 41a,41b während der Behälterproduktion durch äussere Belastungen nicht von dem Preform entfernt werden, jedoch mit Handkraft oder einer vergleichbaren Kraft einer Abnehmmaschine voneinander getrennt werden können.

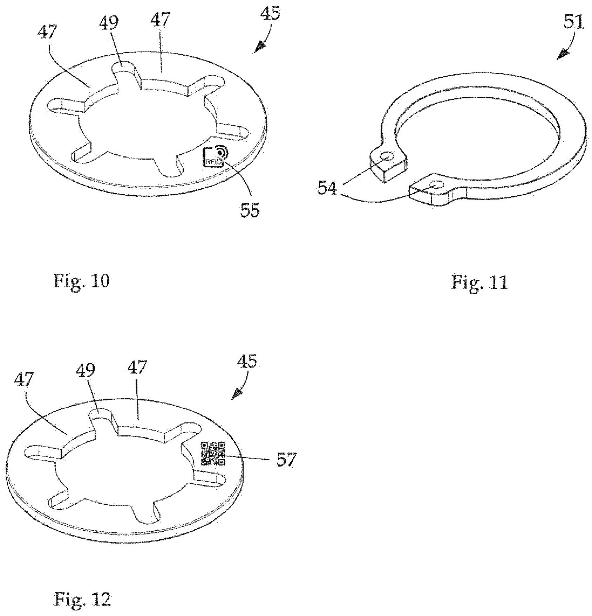

Der Stützring kann auch in einer Ausführungsform gemäss der Figur 10 gestaltet sein. Dieser Lamellenring bzw. Stützring 45 hat eine Mehrzahl von sich in radialer Richtung erstreckender Lamellen 47 ausgebildet, welche durch Vertiefungen 49 voneinander getrennt sind. Der Stützring 45 lässt sich von oben auf den Preform aufschieben, indem sich die Lamellen 47 in axialer Richtung aufbiegen lassen und in der Nut 23 durch ihre Rückstellkraft verrasten. Genauso einfach lässt sich der Stützring 45 in umgekehrter axialer Richtung von dem Preform 11 abziehen.

In der fünften Ausführungsform ist der Stützring als eine Art Seegerring 51 ausgeformt. Mit Hilfe einer Aufspreizzange, welche in Angriffslöchern 54 angreifen kann, lässt sich der Seeger Ring 51 in der Nut 23 positionieren und aus dieser entfernen.

Denkbar sind auch Stützringe in anderen Ausführungsformen, welche in der Nut aufgenommen werden können.

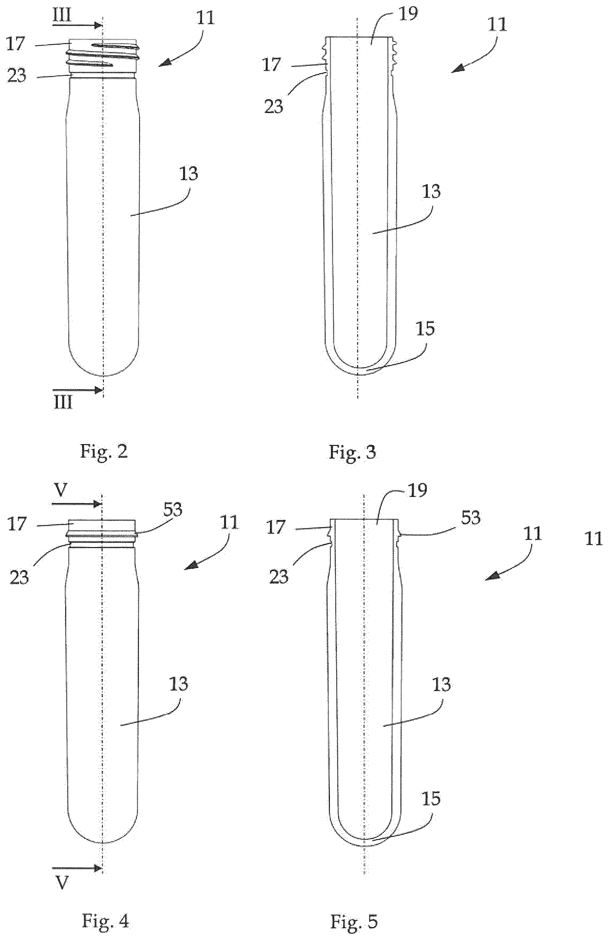

In den Figuren 2 bis 7 sind unterschiedlich ausgeformte Preforms 11 gezeigt, auf welche sich ein Stützring 21,33,39,45,51 gemäss obiger Beschreibung befestigen lässt und wieder abnehmen lässt. An dem Halsabschnitt 17 können Befestigungsmittel ausgebildet sein, um ein Verschlussteil formschlüssig an dem Halsabschnitt 17 befestigen zu können. Dies kann ein Aussengewinde 52 sein, wie in den Figuren 1, 2, 3, 6 und 7 gezeigt, welches mit dem Innengewinde eines Verschlussdeckels korrespondiert. In den Figuren 4 und 5 ist ein ringförmiger Absatz 53 mit einer Kante gezeigt, welcher mit einem korrespondierenden Deckel einen Schnappverschluss bildet.

Durch die vorliegende Erfindung lassen sich Kunststoffbehälter nach dem Zweistufen-Streckblasverfahren herstellen, deren Aussendurchmesser viel grösser ist als es der Stand der Technik bis jetzt erlaubte. Da der Stützring nach der Produktion des Kunststoffbehälters abnehmbar ist, stellt dieser keine limitierende Grösse für den Aussendurchmesser des Preforms 11 dar. Deshalb kann an dem Preform 11 an seiner Aussenwand Kunststoffmaterial vorgesehen sein, welches dessen Aussendurchmesser vergrössert. Das aufgebrachte Kunststoffmaterial in radialer Erstreckung ermöglicht die Ausformung von grossen Behälterdurchmessern, ohne dass das Kunststoffmaterial übersteckt werden würde. Der Aussendurchmesser des Stützrings, welcher aus produktionstechnischen Bedingungen grundsätzlich grösser sein muss als der Preformaussendurchmesser, hat keinen Einfluss, da der Stützring von dem fertigen Kunststoffbehälter abgenommen werden kann. In den Figuren 6 und 7 ist beispielsweise ein Preform 11 gezeigt, welcher einen Preformkörper 13 mit einem besonders grossen Aussendurchmesser besitzt, da die Wandstärke mit Kunststoffmaterial gezielt vergrössert wird. Die Wandstärke kann bis zu 6 mm betragen. Der Aussendurchmesser des Stützrings muss aus produktionstechnischen Gründen zwar grösser sein als der Aussendurchmesser des Körpers 13 - Da der Stützring abnehmbar ist, ist dieser an dem produzierten Kunststoffbehälter jedoch nicht mehr vorhanden und hat daher keinen Einfluss auf das Design des Endprodukts. Die erhöhte Wandstärke des Körpers 13 ermöglicht vergrösserte radiale Streckraten, wodurch ein Kunststoffbehälter mit einem grossen Aussendurchmesser des Körperabschnitts relativ zu dem Aussendurchmesser des Halsabschnittes herstellbar ist. Bevorzugt ist es, wenn die Wandstärke nach aussen zunimmt und der Innendurchmesser des Preforms 11 in axialer Richtung konstant ist. Dadurch liegt die Aussenseite des Körpers näher an den Hohlraumwänden des Formwerkzeugs. Dies führt dazu, dass ein Überstrecken des Preforms in radialer Richtung verhindert werden kann.

Das erfindungsgemässe Verfahren zur Herstellung von Kunststoffbehältern erfolgt in einem Zweistufen-Streckblasverfahren gemäss den folgenden Schritten:
In dem ersten Verfahrensschritt des Zweistufen-Streckblasverfahrens wird ein Preform 11 mit einem länglichen Körper 13, einem Boden 15, welcher an einem ersten Längsende des Körpers 13 ausgebildet ist, einem Halsabschnitt 17, welcher an einem zweiten Längsende des Körpers 13 ausgebildet ist und dem ersten Längsende gegenüber liegt und einer Ausgiessöffnung 19, welche an dem Halsabschnitt 17 vorgesehen, spritzgegossen.

In dem zweiten Verfahrensschritt des Zweistufen-Streckblasverfahrens wird der Preform 11 wieder erwärmt, in ein Formwerkzeug eingebracht und in dem Formwerkzeug zuerst durch einen Streckdorn in der Länge verstreckt und dann mit Druckluft aufgeblasen, und die fertige Kunststoffflasche wird aus dem Formwerkzeug entformt.

Ein Stützring 21,33,39,45,51 welcher für die Herstellung des Kunststoffbehälters im Zweistufen-Streckblasverfahren unerlässlich ist, wird nicht zusammen mit dem Preform 11 spritzgegossen. Vielmehr wird der Stützring 21,33,39,45,51 auf den Preform 11 nach dem Spritzgiessen zwischen dem Körper 13 und dem Halsabschnitt 17 befestigt. Der Stützring 21,33,39,45,51 ist daher ein separates Element, welches erst nach dem Spritzguss mit dem Preform 11 verbunden wird.

Um die Prozesszeiten möglichst kurz zu halten, ist es bevorzugt, wenn der Stützring 21,33,39,45,51 während des Abkühlprozesses des spritzgegossenen Preforms 11 mit diesem verbunden wird, bevorzugt dadurch, dass der Stützring 21,33,39,45,51 auf den Preform11 aufgesteckt wird. Der Stützring kann aber auch während eines an das Spritzgiessen folgenden Prozessschritts mit dem Preform verbunden werden. Von Bedeutung ist, dass der Stützring auf dem Preform befestigt ist, bevor der Preform in das Formwerkzeug eingesetzt wird.

Möglich ist es auch, den Stützring 21,33,39,45,51 und den Preform 11 zusammen in einer gemeinsamen Spritzgussform nach einem 2-Komponenten-Spritzgiessverfahren herzustellen. Der Stützring kann aus einem anderen Material gefertigt sein als der Preform, damit sich dieser von dem Preform abnehmen lässt. Sofern die verwendeten Kunststoffe keine Bindung miteinander eingehen, ist auf diese Weise eine einfache Bestückung des Preforms mit einem abnehmbaren Stützring möglich.

Um die Prozesszeiten weiterhin gar nicht oder nur unwesentlich zu verlängern wird der Stützring 21,33,39,45,51 während eines Prozessschrittes von dem fertig geblasenen Kunststoffbehälter abgenommen, nachdem der Kunststoffbehälter ausgeformt wurde. Die Entfernung des Stützrings 21,33,39,45,51 kann bei noch geschlossenem Formwerkzeug durchgeführt werden. Wenn der Stützring jedoch für weitere Transportzwecke noch benötigt wird, so ist es sinnvoll diesen erst nach dem Entformen abzunehmen. Beispielsweise kann der Stützring während dem Transport zur Endverpackung oder Befüllung des Kunststoffbehälters erfolgen. Auch kann der Stützring während der Endverpackung des Kunststoffbehälters, beispielsweise der Palettierung, von dem Behälter entfernt werden.

Der Stützring 21,33,39,45,51 kann einen Datenträger aufweisen. Der Datenträger kann in oder auf dem Stützring 21,33,39,45,51 angebracht sein. Bevorzugt ist es, wenn der Datenträger durch eine elektronische Schaltung 55 realisiert ist. Die elektronische Schaltung kann ein RFID-Transponder 55 sein, insbesondere ein passiver RIFD-Transponder. Unter einem RFID-Transponder (radio-frequency identification transponder) soll im Rahmen dieser Anmeldung eine elektronische Schaltung verstanden werden, aus welcher berührungslos Daten mit Hilfe elektromagnetischer Wellen aus dem Transponder wenigstens ausgelesen und bevorzugt auch eingelesen werden können. Zum Auslesen wird ein Lesegerät benötigt. Bei einem passiven RFID-Transponder wird dessen Energieversorgung aus den Funksignalen des Lesegerätes bereitgestellt. Der Aufbau eines RFID-Transponders sieht prinzipiell eine Antenne, einen analogen Schaltkreis zum Empfangen und Senden (Transceiver) sowie einen digitalen Schaltkreis und einen permanenten Speicher vor. Der digitale Schaltkreis ist bei komplexeren Modellen ein kleiner Mikrocontroller. RFID-Transponder verfügen über einen mindestens einmal beschreibbaren Speicher, der ihre unveränderliche Identität enthält. Werden mehrfach beschreibbare Speicher eingesetzt, können während der Lebensdauer weitere Informationen abgelegt werden. Ein RFID-Transponder kann sehr kleinbauend ausgeführt werden und daher leicht in dem Stützring 21,33,39,45,51 untergebracht werden. In der Figur 11 ist stellvertretend für alle gezeigten Stützringe ein RFID-Transponder 55 an dem Stützring 45 angeordnet.

Folgende Informationen können beispielsweise in dem RFID-Transponder 55 gespeichert werden:
- eine eindeutige Identifikationsnummer
- der Produktionszeitpunkt und -ort
- das Material des Preforms 11 und Informationen zu dessen Rezyklierbarkeit
- Produktinformationen zum Inhalt des Behälters, welcher aus dem Preform 11 hergestellt ist,
- Informationen, ob es sich um einen Pfandbehälter handelt,
- Informationen, ob für die Flasche vom Endkonsumenten Pfand bezahlt wurde (bspw. durch Speichern einer entsprechenden Information beim Bezahlvorgang an Kassen) und
- Informationen hinsichtlich des Pfandsystems, d.h. es können Informationen gespeichert werden, die Auskunft darüber geben, welches Pfandsystem zur Anwendung gelangt.

Denkbar ist es, dass nur die Identifikationsnummer in dem RFID-Transponder 55 gespeichert ist und diese eindeutig anderen Informationen zuordenbar ist, welche extern gespeichert sind. Die Identifikationsnummer kann bei dieser Ausführungsform in Verbindung mit einer Datenbank dazu genutzt werden, die übrigen Informationen zentral zu speichern und über die Identifikationsnummer abrufbar zu machen. Ein Abspeichern der übrigen Informationen kann dann auf dem permanenten Speicher entfallen, wodurch die Speicherkapazität gering gehalten werden kann.

Während der Herstellung des Stützringes 21,33,39,45,51 kann der Datenträger in Gestalt einer elektronischen Schaltung in die Spritzgussform eingelegt werden und von dem Stützring umspritzt werden. Dann befindet sich der Datenträger, beispielsweise der RFID-Transponder 55, innerhalb des Stützringes und ist zuverlässig vor mechanischen Beschädigungen oder Verschmutzung geschützt. Der RFID-Transponder 55 muss nicht sichtbar an dem Stützring angebracht sein, da die Datenübertragung über Funk erfolgt. Deshalb wird ein RFID-Transponder auch als "Funketikett" bezeichnet.

Insbesondere für den Fall dass der Datenträger in Form einer elektronischen Schaltung realisiert ist, ist es wichtig, dass der Supportring 21,33,39,45,51 abnehmbar ist. Wäre nämlich die elektronische Schaltung in der Wand- oder Bodenfläche eine Behälters verbaut, so wäre der gesamte Behälter nach Gebrauch nur schwer recyclebarer Abfall und als Elektronikschrott zu behandeln. Dessen Entsorgung wäre deutlich aufwändiger als die Entsorgung reiner Kunststoffbehälter.

Der Datenträger kann auch in lesbarer Form für ein Datenerfassungsgerät, beispielsweise als Strichcode oder QR-Code, an der Oberfläche des Stützringes 21,33,39,45,51 angebracht sein. Denkbar ist es auch anstatt eines Strichcodes oder eines QR-Codes ein Wasserzeichen in zweidimensionaler oder dreidimensionaler Form zu verwenden, um lesbare Daten bereit zu stellen. In der Figur 12 ist stellvertretend für alle gezeigten Stützringe ein lesbarer Datenträger in Gestalt eines QR-Codes 57 an dem Stützring 45 angeordnet.

Der abnehmbarer Stützring 21,33,39,45,51 kann während des Produktionsprozesses des Behälters bzw. während der Befüllung wegen seiner primären Funktion als Halteelement genutzt werden. Zusätzlich können während des Produktionsprozesses bzw. während dessen Befüllung Daten auf den RFID-Transponder 55 aufgespielt oder ausgelesen, welche relevant für den Produktionsprozess sind. Beim Verlassen der Produktion bzw. der Füllanlage kann der Stützring 21,33,39,45,51 entfernt werden und somit ist der Materialeinsatz zur Herstellung des Preforms 11 bzw. des Behälters deutlich verringert.

Ebenso ist denkbar, dass während der Produktion des Behälters oder während dessen Befüllung Daten auf den RFID-Transponder 55 aufgespielt werden, die für den Endkonsumenten oder die für eine Wiederverwertung des für den Behälter eingesetzten Materials von Bedeutung sind. In diesem Fall erfüllt der Stützring die Funktion des Datenträgers, der leicht von dem Behälter abgetrennt werden kann, um einerseits die Vorteile eines elektronischen, wiederbeschreibbaren Speichermediums zu nutzen und andererseits eine problemlose Wiederverwertung des Behälters zu ermöglichen.

### Legende:

- 11: Preform
- 13: Länglicher Preformkörper
- 15: Boden
- 17: Halsabschnitt
- 19: Ausgiessöffnung
- 21: Stützring in einer ersten Ausführungsform
- 23: Nut
- 25: Grund der Nut
- 27a,27b: Erste und zweite Seitenflanke der Nut
- 29: Innendurchmesser des Stützrings
- 31: Durchmesser des Grunds
- 32: Öffnungswinkel des Stützrings 21
- 33: Stützring in einer zweiten Ausführungsform
- 34a,34b: Teile des Stützrings 33
- 35a,35b: Erstes und zweites Gelenk des Stützrings
- 37a,37b: Bolzen
- 39: Stützring in einer dritten Ausführungsform
- 41a,41b: Teile des Stützrings 39
- 43: Magnete
- 45: Stützring in einer vierten Ausführungsform, Lamellenring
- 47: Lamellen
- 49: Vertiefungen
- 51: Stützring in einer fünften Ausführungsform, Seeger-Ring
- 52: Aussengewinde
- 53: Ringförmiger Absatz
- 54: Angriffslöcher
- 55: Elektronische Schaltung, RFID-Transponder
- 57: QR-Code

## Patentansprüche

1. Preform (11) zur Herstellung von Kunststoffbehältern, insbesondere Kunststoffflaschen, in einem Zweistufen-Streckblasverfahren umfassend
- einen länglichen Körper (13),
- einen Boden (15), welcher an einem ersten Längsende des Körpers (13) ausgebildet ist,
- einen Halsabschnitt (17), welcher an einem zweiten Längsende des Körpers (13) ausgebildet ist und dem ersten Längsende gegenüber liegt,
- eine Ausgiessöffnung (19), welche an dem Halsabschnitt (17) vorgesehen ist und
- einen Stützring (21,33,39,45,51), welcher radial von dem Körper abragt und den Halsabschnitt von dem Körper trennt, wobei
der Stützring (21,33,39,45,51) ein separates Stützelement ist, welches formschlüssig an dem Preform (11) festlegbar ist
, **dadurch gekennzeichnet, dass**
der Stützring (21,33,39,45,51) von dem Preform (11) abnehmbar ist, und
der Körper (13) einen Aussendurchmesser besitzt, welcher den Aussendurchmesser des Halsabschnittes (17) um mehr als 5 mm, bevorzugt um mehr als 10 mm und besonders bevorzugt um mehr 15 mm überragt.

2. Preform nach Anspruch 1, **dadurch gekennzeichnet, dass** an dem Preform (11) am Übergang von dem Halsabschnitt (17) zu dem Körper (13) eine sich in Umfangsrichtung des Preforms (11) erstreckende Nut (23), bevorzugt eine Ringnut, vorgesehen ist, in welche der Stützring (21,33,39,45,51) eingreifen kann, wobei die Nut (23) einen Grund (25) und eine erste und zweite an den Grund (25) anschliessende Flanke (27a,27b) umfasst und dass der Innendurchmesser (29) des Stützrings (21,33,39,45,51) im Wesentlichen dem Durchmesser des Grunds (25) entspricht.

3. Preform nach einem der Ansprüche 1 oder 2, **dadurch gekennzeichnet, dass** der Stützring (21) offen ist und sich derart aufweiten lässt, dass er auf den Preform (11) aufsteckbar ist, indem er in der Nut (23) aufnehmbar ist.

4. Preform nach Anspruch 3, **dadurch gekennzeichnet, dass** der Stützring (21) einen Öffnungswinkel (32) von kleiner als 180 Grad und grösser als 0 Grad, bevorzugt von kleiner als 160 Grad und grösser als 30 Grad und besonders bevorzugt von kleiner als 120 Grad und grösser als 70 Grad besitzt.

5. Preform nach einem der vorangehenden Ansprüche, **dadurch gekennzeichnet, dass** der Stützring (33) wenigstens ein Gelenk (35a,35b) besitzt, um welches er aufklappbar und schliessbar ist.

6. Preform nach einem der Ansprüche 1 bis 2 oder 5, **dadurch gekennzeichnet, dass** der Stützring (33,39) zwei Halbkreissegmenten umfasst, welche aneinander befestigbar sind.

7. Preform nach einem der vorangehenden Ansprüche, **dadurch gekennzeichnet, dass** der Stützring (21,33,39,45,51) aus einem kunststoffummantelten Federstahl, aus Metall oder Kunststoff besteht.

8. Preform nach einem der vorangehenden Ansprüche, **dadurch gekennzeichnet, dass** der Stützring (45) aus einem elastischen Material besteht und eine Mehrzahl von sich in radialer Richtung erstreckender und in axialer Richtung des Preforms aufbiegbarer Lamellen (47) ausgebildet hat.

9. Preform nach einem der vorangehenden Ansprüche, **dadurch gekennzeichnet, dass** an dem Halsabschnitt (17) Befestigungsmittel (52,53) zur formschlüssigen Festlegung eines mit korrespondierenden Eingriffsmitteln ausgestatteten Verschlussteils ausgebildet sind.

10. Preform nach einem der vorangehenden Ansprüche, **dadurch gekennzeichnet, dass** das Verhältnis des Aussendurchmessers des Körpers zu dem Aussendurchmesser des Halsabschnittes zwischen 1,05 und 0,7 beträgt.

11. Preform nach einem der vorangehenden Ansprüche, **dadurch gekennzeichnet, dass** der Körper (13) eine Wandstärke von 3 mm, bevorzugt von 5 mm und besonders bevorzugt von 7 mm besitzt, wobei der Innendurchmesser des Halsabschnitts (17) und des Körpers (13) im Wesentlichen gleich gross sind.

12. Preform nach einem der vorangehenden Ansprüche, **dadurch gekennzeichnet, dass** der Preform (11) aus Polyethylenterephtalat, Polypropylen oder Polyethylenfuranoat besteht.

13. Kunststoffbehälter hergestellt in einem Zweistufen-Streckblasverfahren aus einem Preform (11) nach einem der vorangehenden Ansprüche mit einem Körperabschnitt und einem damit verbundenen Behälterhals, dessen Geometrie im Wesentlichen der Geometrie des Halsabschnittes (17) des Preforms (11) entspricht, wobei zwischen dem Körperabschnitt und dem Behälterhals ein Befestigungsmittel zur formschlüssigen Festlegung eines mit einem korrespondierenden Eingriffsmittel ausgestatteten Stützrings (21,33,39,45,51) ausgebildet ist, wobei das Verhältnis des Behälterhalsdurchmessers zum Aussendurchmesser des Körperabschnitts 3 bis 6 beträgt.

## Claims

1. A preform (11) for the production of plastic containers, in particular plastic bottles, in a two-step stretch-blow process comprising
- an elongated body (13),
- a bottom (15), which is formed at a first longitudinal end of the body (13),
- a neck section (17), which is formed at a second longitudinal end of the body (13) and lies opposite the first longitudinal end,
- a spout (19), which is provided at the neck section (17) and
- a support ring (21, 33, 39, 45, 51), which projects radially from the body and separates the neck section from the body, wherein the support ring (21, 33, 39, 45, 51) is a separate support element which can be fixed in a form-fitting manner to the preform (11),
**characterised in that**
the support ring (21, 33, 39, 45, 51) can be removed from the preform (11), and the body (13) has an outer diameter which exceeds the outer diameter of the neck section (17) by more than 5 mm, preferably by more than 10 mm and especially preferably by more than 15 mm.

2. The preform according to claim 1, **characterised in that** a groove (23), preferably a ring groove, extending in the circumferential direction of the preform (11), into which the support ring (21, 33, 39, 45, 51) can engage, is provided on the preform (11) at the transition from the neck section (17) to the body (13), wherein the groove (23) comprises a base (25) and a first and second flank (27a, 27b) adjoining the base (25), and that the inner diameter (29) of the support ring (21, 33, 39, 45, 51) essentially corresponds to the diameter of the base (25).

3. The preform according to any one of claims 1 or 2, **characterised in that** the support ring (21) is open and can be widened in such a way that it can be attached to the preform (11) by being received in the groove (23).

4. The preform according to claim 3, **characterised in that** the support ring (21) has an opening angle (32) of less than 180 degrees and greater than 0 degrees, preferably of less than 160 degrees and greater than 30 degrees, and especially preferably of less than 120 degrees and greater than 70 degrees.

5. The preform according to any one of the preceding claims, **characterised in that** the support ring (33) comprises at least one hinge (35a, 35b) around which it can be folded and closed.

6. The preform according to any one of claims 1 to 2 or 5, **characterised in that** the support ring (33, 39) comprises two semicircular segments which are attachable to each other.

7. The preform according to any one of the preceding claims, **characterised in that** the support ring (21, 33, 39, 45, 51) consists of a plastic-coated spring steel, of metal or plastic.

8. The preform according to any of the preceding claims, **characterised in that** the support ring (45) consists of an elastic material and has formed a plurality of lamellas (47) extending in the radial direction and capable of bending in the axial direction of the preform.

9. The preform according to any one of the preceding claims, **characterised in that** fasteners (52, 53) for the form-fitting fixing of a closure part equipped with corresponding engagement means are formed on the neck section (17).

10. The preform according to any of the preceding claims, **characterised in that** the ratio of the outer diameter of the body to the outer diameter of the neck section is between 1.05 and 0.7.

11. The preform according to any one of the preceding claims, **characterised in that** the body (13) has a wall thickness of 3 mm, preferably of 5 mm and especially preferably of 7 mm, wherein the inner diameter of the neck section (17) and the body (13) are essentially the same size.

12. The preform according to any one of the preceding claims, **characterised in that** the preform (11) consists of polyethylene terephthalate, polypropylene or polyethylene furanoate.

13. A plastic container produced in a two-step stetch-blowing process from a preform (11) according to any one of the preceding claims, with a body section and a container neck connected thereto, the geometry of which essentially corresponds to the geometry of the neck section (17) of the preform (11), wherein a fastener for the form-fitting fixing of a support ring (21, 33, 39, 45, 51) equipped with a corresponding engagement means is formed between the body section and the container neck, wherein the ratio of the container neck diameter to the outer diameter of the body section is 3 to 6.

## Revendications

1. Préforme (11), destinée à produire des contenants en matière plastique, notamment des bouteilles en matière plastique, lors d'un procédé d'étirage-soufflage en deux étapes, comprenant
- un corps (13) allongé,
- un fond inférieur (15), lequel est conçu sur une première extrémité longitudinale du corps (13),
- un segment formant col (17), lequel est conçu sur une deuxième extrémité longitudinale du corps (13) et est placé au vis-à-vis de la première extrémité longitudinale,
- un orifice de déversement (19), lequel est prévu sur le segment formant col (17) et
- une bague d'appui (21, 33, 39, 45, 51), laquelle saillit en direction radiale à partir du corps et sépare le segment formant col du corps, la bague d'appui (21, 33, 39, 45, 51) étant un élément d'appui séparé, lequel peut s'immobiliser par complémentarité de forme sur la préforme (11), **caractérisée en ce que**
la bague d'appui (21, 33, 39, 45, 51) est amovible de la préforme (11) et le corps (13) détient un diamètre extérieur, lequel saillit au-delà du diamètre extérieur du segment formant col (17) de plus de 5 mm, de manière préférentielle, de plus de 10 mm et de manière particulièrement préférentielle, de plus de 15 mm.

2. Préforme selon la revendication 1, **caractérisée en ce que** sur la préforme (11), à la transition du segment formant col (17) vers le corps (13) est prévue une rainure (23) s'étendant dans la direction circonférentielle de la préforme (11), de manière préférentielle une rainure annulaire, dans laquelle peut s'engager la bague d'appui (21, 33, 39, 45, 51), la rainure (23) comprenant un fond (25) et un premier et un deuxième flancs (27a, 27b) se raccordant sur le fond (25) et **en ce que** le diamètre intérieur (29) de la bague d'appui (21, 33, 39, 45, 51) correspond sensiblement au diamètre du fond (25).

3. Préforme selon l'une quelconque des revendications 1 ou 2, **caractérisée en ce que** la bague d'appui (21) est ouverte et se laisse élargir de sorte à être emboîtable sur la préforme (11), en pouvant être réceptionnée dans la rainure (23).

4. Préforme selon la revendication 3, **caractérisée en ce que** la bague d'appui (21) détient un angle d'ouverture (32) de moins de 180 degrés et de plus de 0 degrés, de manière préférentielle, de moins de 160 degrés et de plus de 30 degrés et de manière particulièrement préférentielle, de moins de 120 degrés et de plus de 70 degrés.

5. Préforme selon l'une quelconque des revendications précédentes, **caractérisée en ce que** la bague d'appui (33) comporte au moins une articulation (35a, 35b), autour de laquelle elle peut se déployer ou se fermer.

6. Préforme selon l'une quelconque des revendications 1 à 2 ou 5, **caractérisée en ce que** la bague d'appui (33, 39) comprend deux segments en demi-cercle, qui peuvent être immobilisés l'un à l'autre.

7. Préforme selon l'une quelconque des revendications précédentes, **caractérisée en ce que** la bague d'appui (21, 33, 39, 45, 51) est constituée d'un acier à ressort enveloppé de matière plastique, d'un métal ou d'une matière plastique.

8. Préforme selon l'une quelconque des revendications précédentes, **caractérisée en ce que** la bague d'appui (45) est constituée d'une matière élastique et a conçu une pluralité de lamelles (47) s'étendant dans la direction radiale et pliables en ouverture dans la direction axiale de la préforme.

9. Préforme selon l'une quelconque des revendications précédentes, **caractérisée en ce que** sur le segment formant col (17) sont conçus des moyens de fixation (52, 53), destinés à immobiliser par complémentarité de forme une pièce de fermeture équipée d'un moyen d'engagement correspondant.

10. Préforme selon l'une quelconque des revendications précédentes, **caractérisée en ce que** le rapport du diamètre extérieur du corps au diamètre extérieur du segment formant col se situe entre 1,05 et 0,7.

11. Préforme selon l'une quelconque des revendications précédentes, **caractérisée en ce que** le corps (13) détient une épaisseur de paroi de 3 mm, de manière préférentielle, de 5 mm et de manière particulièrement préférentielle, de 7 mm, le diamètre intérieur du segment formant col (17) et du corps (13) étant sensiblement de dimensions égales.

12. Préforme selon l'une quelconque des revendications précédentes, **caractérisée en ce que** la préforme (11) est constituée de polyéthylène téréphtalate, de polypropylène ou de polyéthylène furanoate.

13. Contenant en matière plastique, produit lors d'un procédé d'étirage-soufflage en deux étapes à partir d'une préforme (11) selon l'une quelconque des revendications précédentes, pourvu d'un segment formant corps et d'un col de contenant assemblé avec celui-ci, dont la géométrie correspond sensiblement à la géométrie du segment formant col (17) de la préforme (11), entre le segment formant corps et le col de contenant étant conçu un moyen de fixation pour l'immobilisation par complémentarité de forme d'une bague d'appui (21, 33, 39, 45, 51) équipée d'un moyen d'engagement correspondant, le rapport du diamètre du col de contenant au diamètre extérieur du segment formant corps étant de 3 à 6.
